**Europäisches Patentamt**

**European Patent Office**

**Office européen des brevets**

(19)

(11) Veröffentlichungsnummer : **0 330 623 B1**

(12) # EUROPÄISCHE PATENTSCHRIFT

(45) Veröffentlichungstag der Patentschrift :
**19.08.92 Patentblatt 92/34**

(51) Int. Cl.$^5$ : **B01J 47/02**, B01J 49/00, C02F 1/42

(21) Anmeldenummer : **89810147.2**

(22) Anmeldetag : **24.02.89**

(54) **Verfahren und Vorrichtung zur diskontinuierlichen Ionenaustauschbehandlung von salzhaltigen Flüssigkeiten.**

(30) Priorität : **25.02.88 CH 710/88**

(43) Veröffentlichungstag der Anmeldung :
**30.08.89 Patentblatt 89/35**

(45) Bekanntmachung des Hinweises auf die
Patenterteilung :
**19.08.92 Patentblatt 92/34**

(84) Benannte Vertragsstaaten :
**AT BE DE ES FR GB IT NL**

(56) Entgegenhaltungen :
**CH-A- 658 796**
**DE-A- 2 137 796**
**DE-A- 3 046 665**

(56) Entgegenhaltungen :
**GB-A- 849 979**
**GB-A- 1 062 293**
**Broschüre von Bayer betreffend Lewatit / Okt. 1983**

(73) Patentinhaber : **Arion, Nicolai**
**Schlattweg 8**
**CH-4147 Aesch / BL (CH)**

(72) Erfinder : **Arion, Nicolai**
**Schlattweg 8**
**CH-4147 Aesch / BL (CH)**

(74) Vertreter : **Héritier, Pierre François et al**
**c/o Patentanwälte Braun, Héritier, Eschmann**
**AG Holbeinstrasse 36-38**
**CH-4051 Basel (CH)**

EP 0 330 623 B1

Jouve, 18, rue Saint-Denis, 75001 PARIS

EP 0 330 623 B1

## Beschreibung

Die Erfindung bezieht sich auf ein Verfahren und eine Vorrichtung zur diskontinuierlichen Ionenaustauschbehandlung von salzhaltigen Flüssigkeiten mittels mehrerer Ionenaustauscherharzbetten.

Um eine Vollentsalzung einer Flüssigkeit, insbesondere einer wässrigen Lösung, durch Ionenaustausch zu erzielen, sind im allgemeinen zwei Behandlungsstufen notwendig. Die erste Stufe wird "Grobentsalzung" genannt; sie entfernt nahezu 99% der Kationen und 99 bis 99,8% der Anionen, die in der Ausgangsflüssigkeit enthalten sind. Die zweite Stufe, die "Feinentsalzung" (Polishing) genannt wird, ergibt eine "vollentsalzte" Flüssigkeit, die nur noch Spuren von 1 bis 50 µg/Liter bzw. ppb an ionogenen Verunreinigungen enthält.

Die Grobentsalzungsstufe besteht nach dem Stand der Technik aus zwei hintereinander geschalteten Kationen- und Anionenaustauscherharzbetten, die im Gleich- oder Gegenstrom regeneriert werden und sich entweder in getrennten Behältern oder in einer einzigen Zweischichtharzbettsäule befinden.

Nach dem Stand der Technik benützt man bei der Vollentsalzung als Feinentsalzungsstufe ein Mischbettfilter, in dem die zu reinigende Flüssigkeit ein Harzbett aus gemischten Kationen- und Anionenaustauscherharzen durchströmt. Bei solchen Mischbettfiltern ist bekanntlich ein grosser Regeneriermittel- und Spülmittelbedarf vorhanden. Die Trennung der Harzkomponenten ist immer unvollständig, und das Regeneriermittel der einen Harzkomponente verunreinigt und belädt einen Teil der anderen Harzkomponente. Ausserdem lassen sich Mischbettfilter nur mit hohen Anlagekosten realisieren.

In der letzten Zeit erschienen in der technischen Literatur Veröffentlichungen, wie z.B. "Kondensatreinigung in Mononett- und Gegenstromtechnik", VGB kraftwerkstechnik 64, Heft 1 (Januar 1984), in denen die Möglichkeit diskutiert wird, zur Kondensatreinigung Monobett-Gegenstromfilter einzusetzen. Ueber den Betrieb von Monobett-Gleichstromfiltern für die älteren Kondensatreinigungsanlagen liegen bereits zahlreiche Informationen vor. Gemäss verschiedenen Autoren ist die Hintereinanderschaltung von Kationenaustauscherfilter uni Anionenaustauscherfilter dem Mischbettfilter bei der Entsalzung von Kondensaten mit einem pH-Wert von mehr von mehr als 9,2 überlegen.

Wenn Monobett-Gleichstromfilter für die Kondensatentsalzung eine brauchbare Alternative zu den Mischbettfiltern darstellen, so kann angenommen werden, dass mit der Monobett-Gegenstromtechnik mindestens gleiche, wenn nicht bessere Ergebnisse zu erzielen sind.

Bei einem Ionenaustauschverfahren zur Reinigung von Wasser mit geringem Feststoffgehalt, das in der am 2. September 1981 erteilten europäischen Patentschrift Nr. 0 002 342 beschrieben ist, durchströmt das Kondensat zwei oder drei Ionenaustauscherharzbetten, die in einem einzigen Behandlungsbehälter enthalten sind. Nach Erschöpfung des Ionenaustauscherharzes werden in der Praxis die drei Harzbetten aus dem Behandlungsbehälter entnommen, in externen Regenerierkolonnen regeneriert und dann wieder in den Behandlungsbehälter zurückgeführt. Die druckschrift erwähnt, dass die Regeneration der Harzbetten auch innerhalb des Behandlungsbehälters stattfinden kömme. Das Verfahren, das bisher nur bei der Behandlung von Kondensaten angewandt wurde, hat bei externer Regenration den Nachteil, das bei der Behandlung von Flüssigkeiten mit hoher Ionenbelastung grosse externe Regenerierkolonnen mit entsprechendem Zubehör (Harzrohre, Harzarmaturen, Verteil- und Drainagesysteme usw.) eingesetzt werden müssen.

Man kennt verschiedene Ionenaustauscher-Systeme für die Behandlung von Flüssigkeiten mit höherer Ionenbelastung mit Ionenaustauscherharzen, bei denen die zu behandelnde Flüssigkeit mehrere hintereinander angeordnete Behandlungsbehälter durchströmt, wobei jeder Behandlungsbehälter mit einem bestimmten Typ von Ionenaustauscherharzen beschickt wird. Diese Systeme haben den Nachteil, dass für jeden Ionenaustauschschritt ein separater Behandlungsbehälter mit entsprechendem Zubehör eingesetzt werden muss und folglich hohe Investitionskosten entstehen.

Ein anderes Ionenaustauscher-System, das alle Funktionen mehrstufiger Ionenaustauschanlagen in einem Behandlungsbehälter zusammenfasst, ist als "Bayer-Multi-Step-System" bekannt (Broschüre Bayer betreffend Lewatit®; Oktober 1983); es ermöglicht das Unterbringen von mehreren Ionenaustauscherharzbetten mit verschiedenen Funktionen in einer einzigen Filtersäule, worin die unterschiedlichen Harze mit den für sie bestimmten Chemikalienlösungen regeriert werden können, ohne dass gegenseitige Störungen auftreten. Dieses System hat aber folgende Nachteile:

– Lange Regenerationsdauer durch die Hintereinanderschaltung der Anionenaustauscherharz- und Kationenaustauscherharz-Regenerations- und -Auswaschschritte.

– Die Regenerierchemikalien, die zuerst das Ionenaustauscherharzbett im oberen Teil der Säule (in der "Feinentsalzungszone") durchfliessen, werden von dem notwendigen "Sperrwasser" verdünnt und danach durch das Ionenaustauscherharzbett im unteren Teil der Säule (in der "Grobentsalzungszone") geleitet, was eine Verschlechterung der Regeneriereffizienz zur Folge hat.

– Die Regenerierchemikalien, die zuerst das obere Ende der Filtersäule durchfliessen, verunreinigen die dort befindliche "Feinentsalzungszone" mit schwer auswaschbaren Chemikalien, so dass eine grosse Spülwassermenge erforderlich ist.

Der vorliegenden Erfindung liegt die Aufgabe zugrunde, ein Verfahren und eine Vorrichtung zur Durchführung dieses Verfahrens zur Verfügung zu stellen, die wirtschaftlicher und sicherer angewendet werden können als die Verfahren und Vorrichtungen nach dem Stande der Technik. Sie sollen auch für die Behandlung und/oder Entsalzung von Flüssigkeiten geeignet sein, die einen relativ hohen Salz- und Feststoffgehalt haben, das heisst, die bis zu ca. 40 oder sogar 100 val/m³ Ionen und bis zu 2 g/m³ Feststoffe enthalten, wobei die gewünschte Reinwasserqualität (wie z.B. $0,1\mu S/cm$) und - menge erhalten werden können.

Diese Aufgabe wird durch das erfindungsgemässe Verfahren wie folgt gelöst:

Um die diskontinuierliche Ionenaustauschbehandlung bzw. die Vollentsalzung von salzhaltigen Flüssigkeiten auch bei relativ hoher Ionenbelastung mittels mehrerer Ionenaustauscherharzbetten durchzuführen, wird die salzhaltige Flüssigkeit nacheinander durch eine Grobentsalzungsstufe, die ein oder mehrere Kationenaustauscherharzbett(en) und ein oder mehrere Anionenaustauscherharzbett(en) umfasst, und durch eine Feinentsalzungsstufe (Polishing), die ebenfalls ein oder mehrere Kationenaustauscherharzbett(en) und ein oder mehrere Anionenaustauscherharzbett(en) umfasst, geleitet, wobei alle Ionenaustauscherharzbetten in einem einzigen Behandlungsbehälter angeordnet sind, der im Auf- und/oder Abstrom durchströmt wird.

Die Ionenaustauscherharzbetten der beiden Behandlungsstufen befinden sich vorzugsweise jeweils in separaten, durch Filterplatten oder Filterböden voneinander getrennten Behandlungsabteilen, wobei alle diese Behandlungsabteile in einem einzigen Behandlungsbehälter (Kolonne) untergebracht sind.

Zur "internen" Regenerierung, das heisst zur Regenerierung innerhalb des Behandlungsbehälters, werden die erschöpften Ionenaustauscherharze im Gleich- oder Gegenstrom regeneriert, indem man das bzw. die Kationenaustauscherharzbett(en) aus der Feinentsalzungsstufe abzieht und in Strömungsrichtung des Regeneriermittels vor das bzw. die entsprechende(n) Kationenaustauscherharzbett(en) der Grobentsalzungsstufe transportiert und das bzw. die Anionenaustauscherharzbett(en) aus der Feinentsalzungsstufe abzieht und in Strömungsrichtung das Regeneriermittels vor das bzw. die entsprechende(n) Anionenaustauscherharzbett(en) der Grobentsalzungsstufe transportiert, worauf man das gesamte Kationenaustauscherharz und das gesamte Anionenaustauscherharz gleichzeitig, aber getrennt im Gleich- oder Gegenstrom mit einem Kationenaustauscher- bzw. Anionenaustauscherregeneriermittel behandelt, den jeweiligen Regeneriermittelüberschuss ausspült, z.B. mit vollentsalztem Wasser, und die in der Strömungsrichtung der Regeneriermittel in der Grobentsalzungsstufe zuvorderst liegenden Anteile der Ionenaustauscherharze wieder in die Feinentsalzungsstufe zurücktransportiert. Danach wird wieder salzhaltige Flüssigkeit durch die Grobentsalzungsstufe und die Feinentsalzungsstufe geführt, bis die Ionenaustauscherharze wieder erschöpft sind und regeneriert werden müssen.

Man kann mittels des erfindungsgemässen Verfahrens salzhaltige Flüssigkeiten behandeln, die bis zu 100 val/m³ Ionen und bis zu 2 g/m³ Feststoffe enthalten.

Es ist möglich, die salzhaltige Flüssigkeit im Abstrom oder im Aufstrom durch den Behandlungsbehälter zu leiten, wobei im Aufstrom vorzugsweise eine lineare Geschwindigkeit vom mindestens 10m/h eingehalten wird. Man kann die Flüssigkeit aber auch im Doppelstrom durch den Behandlungsbehälter führen, der in diesem Falle der Länge nach unterteilt ist, wobei die Flüssigkeit in der einen Hälfte im Aufstrom und in der anderen Hälfte im Abstrom geführt wird. Dadurch ist es möglich, bei gleichem Querschnitt, aber doppelter Länge des Behandlungsbehälters den doppelten hydraulischen Durchsatz zu erzielen.

Die Ionenaustauscherharzbetten können jeweils aus einem einzigen Ionenaustauscherharz oder aus einem Gemisch von verschiedenen Ionenaustauscherharzen bestehen.

Die Regenerierung der Ionenaustauscherharze innerhalb des Behandlungsbehälters kann im Gegenstrom oder im Gleichstrom erfolgen.

Das erfindungsgemässe Verfahren kann zur Vollentsalzung von mit relativ hohem Salz- und Feststoffgehalt belasteten Flüssigkeiten auf Restkonzentrationen von weniger als 0,5 g/m³ Salzgehalt angewandt werden, indem man die zu behandelnde Flüssigkeit durch mindestens zwei Behandlungsabteile im Behandlungsbehälter leitet, die abwechselnd und in dieser Reihenfolge Betten von Kationen- und Anionenaustauscherharz(en) enthalten.

Die Vorrichtung zur Durchführung des erfindungsgemässen Verfahrens ist dadurch gekennzeichnet, dass zwei oder mehr Behandlungsabteile, die durch Filterböden bzw. Doppelfilterböden getrennt sind, in einem Behandlungsbehälter vorgesehen sind, wobei Verteil- und Drainagesysteme für die Ionenaustauscherharze im unteren bzw. oberen Teil der Behandlungsabteile so angebracht sind, dass die Ionenaustauscherharze gleichmässig aus den einen Behandlungsabteilen abgezogen und in die anderen Behandlungsabteile zugeführt werden können.

Vorzugsweise weisen die Doppelfilterböden spezielle Filterdüsen zur gleichzeitigen Durchführung der Regenerierung der Anionen- und Kationenaustauscherharze auf.

Im folgenden werden verschiedene Ausführungsformen der Erfindung anhand der Zeichnung beschrieben.

In der Zeichnung zeigen:

Fig. 1 das Schaltbild einer Einkolonnenentsalzungsanlage gemäss der Erfindung, die als Aufstromanlage mit Gegenstromregeneration ausgebildet ist;

Fig. 2 den Ausschnitt "x" aus Fig. 1, der einen Doppelfilterboden mit der dazugehörigen speziellen Filterdüse darstellt; und

Fig. 3 das Schaltbild einer Einkolonnenentsalzungsanlage gemäss der Erfindung, die als Abstromanlage mit Gleichstromregeneration ausgebildet ist.

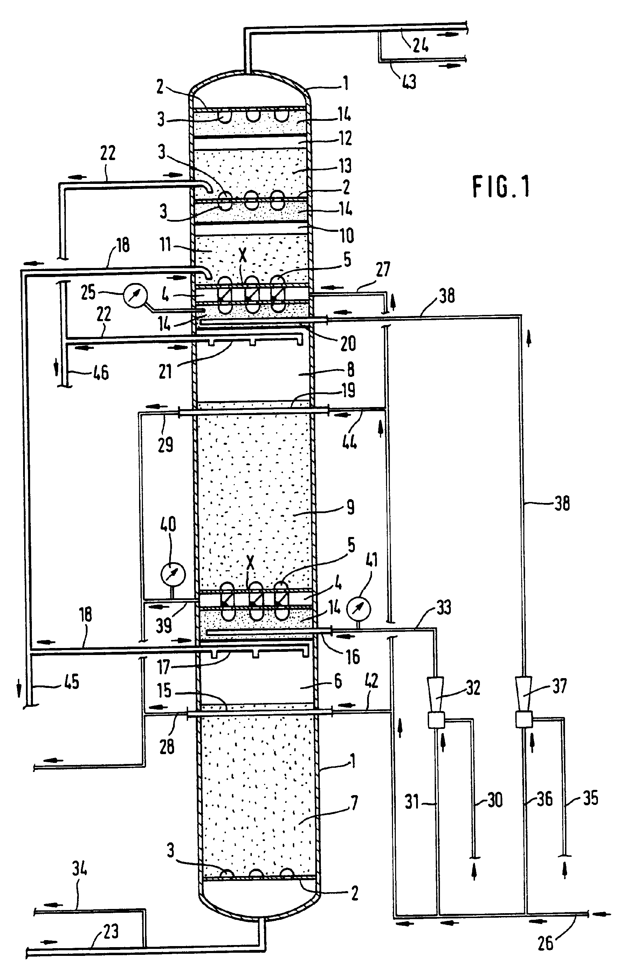

Die in Fig. 1 dargestellte Entsalzungsanlage besteht aus einem Behandlungsbehälter (einer Kolonne) 1; im Inneren des Behandlungsbehälters 1 sind drei Filterböden 2 mit Filterdüsen 3 und zwei Doppelfilterböden 4 mit Spezialfilterdüsen 5 angeordnet, die die im folgenden beschriebenen vier separaten Behandlungsabteile 6, 8, 10, 12 begrenzen.

Das untere (erste) Behandlungsabteil 6 enthält ein Kationenaustauscherharzbett 7, das z.B. aus einem stark sauren Kationenaustauscherharz besteht. Das mittlere (zweite) Behandlungsabteil 8 enthält ein Anionenaustauscherharzbett 9, das z.B. aus einem stark basischen Anionenaustauscherharz besteht. Das dritte Behandlungsabteil 10 enthält ein Kationenaustauscherharzbett 11, das z.B. aus einem stark sauren Kationenaustauscherharz besteht. Das obere (vierte) Behandlungsabteil 12 enthält ein Anionenaustauscherharzbett 13, das z.B. ein stark basisches Anionenaustauscherharz enthält.

Das Kationenaustauscherharzbett 7 bildet zusammen mit dem Anionenaustauscherharzbett 9 die "Grobentsalzungsstufe", während das Kationenaustauscherharzbett 11 und das Anionenaustauscherharzbett 13 die "Feinentsalzungsstufe" bilden.

Unter den oberen zwei der Filterböden 2 und unter den zwei Doppelfilterböden 4 befinden sich jeweils Inertharzschichten 14 zum Schutz der Filterdüsen 3 bzw. der Spezialfilterdüsen 5.

Das Behandlungsabteil 6 ist mit einem Wasserverteil- und -drainagesystem 15, einem Säureverteilsystem 16 und einem Harzverteil- und -drainagesystem 17 versehen. Ein Harzrohr 18 verbindet das Harzverteil- und -drainagesystem 17 mit dem unteren Teil des Behandlungsabteils 10, der das Kationenaustauscherharz 11 enthält.

Das Behandlungsabteil 8 ist mit einem Wasserverteil- und -drainagesystem 19, einem Laugeverteilsystem 20 und einem Harzverteil- und -drainagesystem 21 versehen. Ein Harzrohr 22 verbindet das Harzverteil- und -drainagesystem 21 mit dem unteren Teil des Behandlungsabteils 12, der das Anionenaustauscherharzbett 13 enthält.

Durch die Leitung 23 tritt ein Rohwasserstrom, der z.B. 5 val/m$^3$ (292,5 g/m$^3$) Natriumchlorid enthält, in den unteren Teil des Behandlungsbehälters 1 ein. Das Rohwasser wird durch den untersten Filterboden 2 gleichmässig verteilt und durchfliesst im Aufstrom die vier Behandlungsabteile 6, 8, 10 und 12, in denen sich die Ionenaustauscherharzbetten 7, 9, 11 bzw. 13 und die Inertharzschichten 14 befinden. Die entsalzte Flüssigkeit, die z.B. eine Leitfähigkeit von ca. 0,1 µS/cm (ca. 0,0013 g/m$^3$ bzw. 1,3 µg/Liter NaCl) hat, wird am oberen Ende des Behandlungsbehälters 1 durch das Rohr 24 abgeleitet.

Die Ionenaustauscherharze in der "Grobentsalzungsstufe" werden durch die Behandlung des Rohwassers allmählich beladen. Wenn die Ionenaustauscherharzbetten 7 und 9 einen vorher festgelegten Erschöpfungsgrad erreicht haben, z.B. wenn der Leitwertmesser 25 eine Leitfähigkeit von ca. 3 µS/cm im oberen Teil des Behandlungsabteils 8 anzeigt, wird der Beladungsprozess unterbrochen, und die Ionenaustauscherharzbetten 7, 9, 11 und 13 werden regeneriert.

Zu diesem Zweck wird zunächst durch das Rohr 27 ein Strom von entsalztem Wasser aus dem Rohr 26 in den Hohlraum des Doppelfilterbodens 4 im unteren Teil des Behandlungsabteils 10 eingeführt. Das entsalzte Wasser fliesst durch die Spezialfilterdüsen 5 nach oben und transportiert das Kationenaustauscherharzbett 11 aus der "Feinentsalzungsstufe" heraus und durch das Harzrohr 18 in das Harzverteil- und -drainagesystem 17; dieses verteilt das Kationenaustauscherharz aus der "Feinentsalzungsstufe" im oberen Teil des Behandlungsabteils 6 über dem dort befindlichen Kationenaustauscherharzbett 7 der "Grobentsalzungsstufe". Das Wasser, das das Harz transportiert hat, wird durch das Wasserverteil- und -drainagesystem 15 und das Rohr 28 abgeleitet.

Dann wird ein Strom von entsalztem Wasser aus dem Rohr 26 durch das Rohr 27, den Hohlraum des Doppelfilterbodens 4 im unteren Teil des Behandlungsabteils 10 und den Filterboden 2 zwischen den Behandlungsabteilen 10 und 12 in den unteren Teil des Behandlungsabteils 12 eingeführt. Das entsalzte Wasser transportiert das Anionenaustauscherharzbett 13 aus der "Feinentsalzungsstufe" heraus und durch das Harzrohr 22 in das Harzverteil- und - drainagesystem 21; dieses verteilt das Anionenaustauscherharz aus der "Feinentsalzungsstufe" im oberen Teil des Behandlungsabteils 8 über dem dort befindlichen Anionenaustauscherharzbett 9 der "Grobentsalzungsstufe". Das Wasser, das das Harz transportiert hat, wird durch das Wasserverteil- und -drainagesystem 19 und das Rohr 29 abgeleitet.

Nun werden die vereinigten Kationen- und Anionenaustauscherharze in der "Grobentsalzungsstufe" gleichzeitig, aber getrennt mit entsprechenden Regeneriermitteln im Gegenstrom regeneriert.

Zu diesem Zwecke werden z.B. 30%ige Salzsäure durch das Rohr 30 und entsalztes Treib- und Verdünnungswasser aus dem Rohr 26 durch das Rohr 31 in die Wasserstrahl-Flüssigkeitspumpe 32 eingeführt. Die dabei entstehende verdünnte Salzsäurelösung (z.B. 10%ige HCl) wird durch das Rohr 33 in das Säureverteilsystem 16 im oberen Teil des Behandlungsabteils 6 eingeführt. Die verdünnte Salzsäurelösung durchströmt das gesamte Kationenaustauscherharzbett im Abstrom und regeneriert dabei das Kationenaustauscherharz im Gegenstrom. Anschliessend wird der Salzsäureüberschuss mit entsalztem Wasser aus dem Rohr 26 über das Rohr 31, die Wasserstrahl-Flüssigkeitspumpe 32, das Rohr 33 und das Säureverteilsystem 16 ausgespült. Der Regenerier- und Spülablauf wird im unteren Teil des Behandlungsbehälters 1 durch das Rohr 34 abgeleitet.

Gleichzeitig mit der Regenerierung des Kationenaustauscherharzes im Behandlungsabteil 6 werden z.B. 30%ige Natronlauge durch das Rohr 35 und entsalztes Treib- und Verdünnungswasser aus dem Rohr 26 durch das Rohr 36 in die Wasserstrahl-Flüssigkeitspumpe 37 eingeführt. Die dabei entstehende verdünnte Natronlauge (z.B. 5%ige NaOH) wird durch das Rohr 38 in das Laugeverteilsystem 20 im oberen Teil des Behandlungsabteils 8 eingeführt. Die verdünnte Natronlauge durchströmt das gesamte Anionenaustauscherharzbett im Abstrom und regeneriert dabei das Anionenaustauscherharz im Gegenstrom. Anschliessend wird der Natronlaugeüberschuss mit entsalztem Wasser aus dem Rohr 26 über das Rohr 36, die Wasserstrahl-Flüssigkeitspumpe 37, das Rohr 38 und das Laugeverteilsystem 20 ausgespült. Der Regenerier- und Spülablauf wird im unteren Teil des Behandlungsabteils 8 gesammelt; er durchfliesst die Spezialfilterdüsen 5 im Hohlraum des Doppelfilterbodens 4 zwischen den Behandlungsabteilen 6 und 8 und wird von dort durch das Rohr 39 abgeleitet.

Der Druck im unteren Teil des Behandlungsabteils 8, der mit dem Manometer 40 gemessen wird, muss grösser sein als der Druck, unter dem die Säurelösung durch das Rohr 33 eingespeist wird und der mit dem Manometer 41 gemessen wird, damit eine gleichzeitige Regeneration der Kationen- und Anionenaustauscherharze durchgeführt werden kann, ohne dass sich die einlaufende Regeneriersäure und die gleichzeitig ablaufende Regenerierlauge bzw. das gleichzeitig ein- und ablaufende Spülwasser gegenseitig beeinflussen.

Nach der Regeneration der Ionenaustauscherharze und dem Spülprozess die am besten regenerierten Schichten von Kationen- bzw. Anionenaustauscherharz, die sich am oberen Ende des Kationenaustauscherharzbettes (im Behandlungsabteil 6) bzw. des Anionenaustauscherharzbettes (im Behandlungsabteil 8) in der "Grobentsalzungsstufe" befinden, wieder in die entsprechenden Behandlungsabteile 10 bzw. 12 der "Feinentsalzungsstufe" zurückgeführt.

Zu diesem Zweck wird zunächst entsalztes Wasser aus dem Rohr 26 durch das Rohr 42 und das Wasserverteil- und -drainagesystem 15 in das Behandlungsabteil 6 eingeführt. Das entsalzte Wasser transportiert den oberen Teil des regenerierten Kationenaustauscherharzes durch das Harzverteil- und -drainagesystem 17 und das Harzrohr 18 in das Behandlungsabteil 10 zurück. Das Wasser, das das Harz transportiert hat, wird durch das Behandlungsabteil 12 und das Rohr 43 am oberen Teil des Behandlungsbehälters 1 abgeleitet.

Anschliessend oder gleichzeitig wird entsalztes Wasser aus dem Rohr 26 durch das Rohr 44 und das Wasserverteil- und -drainagesystem 19 in das Behandlungsabteil 8 eingeführt. Das entsalzte Wasser transportiert den oberen Teil des regenerierten Anionenaustauscherharzes durch das Harzverteil- und -drainagesystem 21 und das Harzrohr 22 in das Behandlungsabteil 12 zurück. Das Wasser, das das Harz transportiert hat, wird durch das Rohr 43 am oberen Teil des Behandlungsbehälters 1 abgeleitet.

Nach Beendigung des Rücktransportes der regenerierten Ionenaustauscherharze in die "Feinentsalzungsstufe" (Behandlungsabteile 10 und 12) wird zuerst eine Kreislaufspülung der gesamten Ionenaustauschvorrichtung durchgeführt, bis die Leitfähigkeit des Kreislaufwassers ca. 0,1 μS/cm erreicht. Anschliessend beginnt der Entsalzungsvorgang wieder.

Erforderlichenfalls können die Ionenaustauscherharze in der "Grobentsalzungsstufe" rückgespült werden.

Das Kationenaustauscherharzbett 7 im Behandlungsabteil 6 wird mit Rohwasser aus der Leitung 23 rückgespült. Das verunreinigte Rückspülwasser wird durch das Harzverteil- und -drainagesystem 17, das Harzrohr 18 und das Rohr 45 abgeleitet.

Das Anionenaustauscherharzbett 9 im Behandlungsabteil 8 wird mit entsalztem Wasser aus dem Rohr 26 rückgespült. Das entsalzte Wasser wird durch das Rohr 31, die Wasserstrahl-Flüssigkeitspumpe 32, das Rohr 33, das Säureverteilsystem 16 sowie den Doppelfilterboden 4 in den unteren Teil des Behandlungsabteils 8 eingeführt. Das verunreinigte Rückspülwasser wird durch das Harzverteil- und -drainagesystem 21, das Harzrohr 22 und das Rohr 46 abgeleitet.

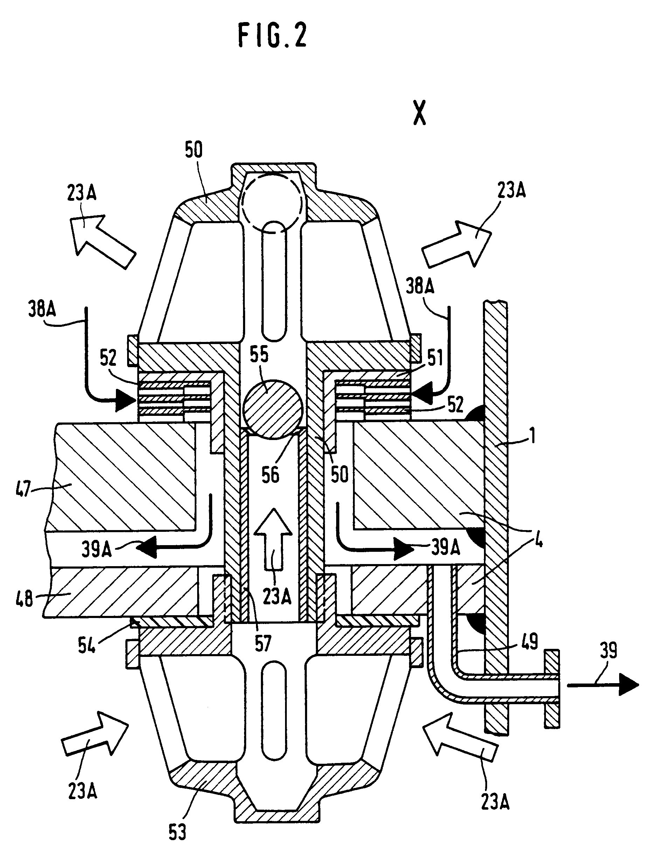

In Fig. 2 besteht jeder Doppelfilterboden 4 aus einer oberen Grundplatte 47, die mit dem Mantel des Behandlungsbehälters 1 sowie einer unteren Deckplatte 48 mittels Schweissverbindungen verbunden ist. Zwischen der Grundplatte 47 und der Deckplatte 48 befindet sich ein Hohlraum, der mit mindestens einem Ein- oder Auslaufrohr 49 verbunden ist. Die dazu gehörende Spezialfilterdüse 5 besteht aus einer oberen Filterdüse 50, die mit einem Gegenstrom-Schliessystem versehen ist, einem Zentrierring 51, einer oder mehreren Ring-Filterlamellen 52, einer unteren Filterdüse 53 sowie einer Ringdichtung 54.

Das Gegenstrom-Schliessystem, das in die obere Filterdüse 50 eingebaut ist, besteht aus einem kugelförmigen Verschlussglied 55, das auf den Dichtrand 56 eines blendenartigen Lagerstücks 57 zur Filterdüse 50 gebracht werden kann. Das Verschlussglied 55 kann federbelastet sein. Es ist aber auch möglich, das Verschlussglied 55 aus einem genügend schweren, aber auch nicht zu schweren Werkstoff herzustellen. Das kugelförmige Verschlussglied 55 wird durch die Federbelastung bzw. durch sein Eigengewicht sowie durch den Druck der Regenerations- und Spülflüssigkeit 38A auf den betreffenden Dichtrand 56 gedrückt, so dass die entsprechende Oeffnung der Filterdüse 50 verschlossen wird. Infolgedessen wird die Regenerations- und Spülflüssigkeit 38A gezwungen, durch die Ring-Filterlamellen 52 in den Hohlraum hineinzufliessen, aus dem die Regenerations- und Spülablaufflüssigkeit 39A durch das Rohr 49 abgeleitet wird. Bei der Umschaltung des Betriebs auf Ionenaustauscherbeladung, bei der die zu reinigende Rohwasserflüssigkeit 23A durch die untere Filterdüse 53 und die obere Filterdüse 50 fliesst, wird das Verschlussglied 55 angehoben und gibt den Durchströmungsquerschnitt der oberen Filterdüse 50 frei.

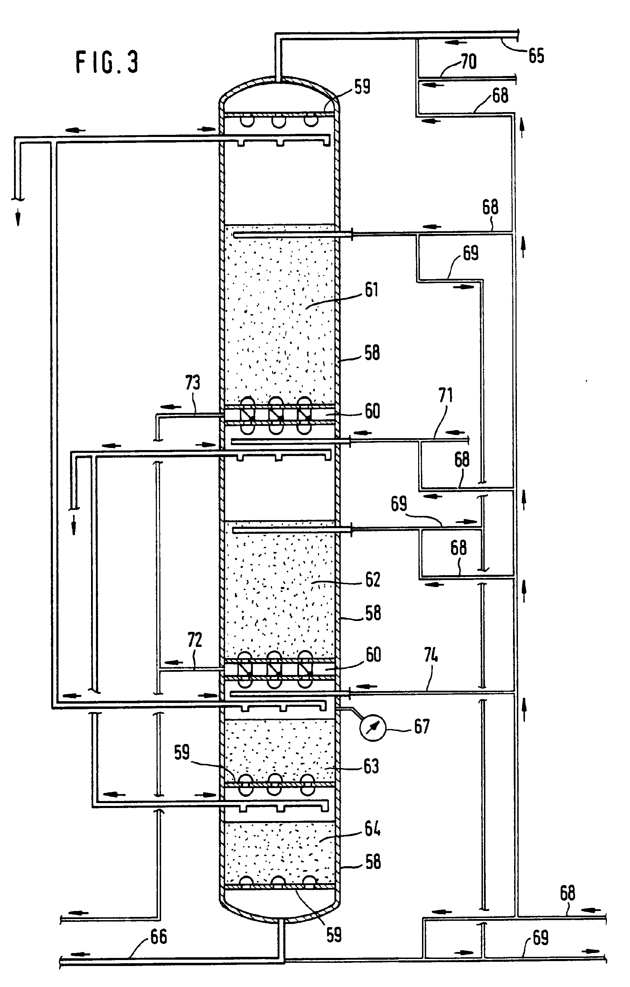

Die in Fig. 3 dargestellte Entsalzungsanlage besteht aus einem Behandlungsbehälter 58; im Inneren des Behälters sind drei Filterböden 59 und zwei Doppelfilterböden 60 angeordnet. Diese begrenzen eine "Grobentsalzungsstufe", die aus einem Kationenaustauscherharzbett 61 und einem Anionenaustauscherharzbett 62 besteht, sowie eine "Feinentsalzungsstufe", die aus einem Kationenaustauscherharzbett 63 und einem Anionenaustauscherharzbett 64 besteht. Der Behandlungsbehälter 58 enthält ferner die notwendigen Harztransportrohre, Harzverteil- und -drainagesysteme sowie Regeneriermittel- und/oder Spülwasserverteil- und -drainagesysteme.

Ein Rohwasserstrom wird durch die Leitung 65 am oberen Teil des Behandlungsbehälters 58 eingeführt und durchströmt die vier Ionenaustauscherharzbetten 61, 62, 63 und 64 im Abstrom. Der behandelte Wasserstrom wird durch das Rohr 66 am unteren Teil des Behandlungsbehälters 58 abgeleitet.

Nach Erschöpfung der Ionenaustauscherharzbetten 61 und 62 in der "Grobentsalzungsstufe", die am Leitfähigkeitsmessgerät 67 festgestellt werden kann, werden die Ionenaustauscherharzbetten 63 und 64 aus der "Feinentsalzungsstufe" mittels entsalzten Wassers, das durch das Rohr 68 zugeführt wird, über die entsprechenden Ionenaustauscherharzbetten 61 bzw. 62 in der "Grobentsalzungsstufe" transportiert. Das entsalzte Wasser, das das Harz transportiert hat, wird durch die Wasserdrainagesysteme und das Rohr 69 abgeleitet.

Danach werden die in der "Grobentsalzungsstufe" vereinigten Kationenaustauscherharze bzw. Anionenaustauscherharze gleichzeitig, aber getrennt mit einer Säurelösung, die durch das Rohr 70 zugeführt wird, bzw. einer Laugelösung, die durch das Rohr 71 zugeführt wird, im Gleichstrom regeneriert und mit entsalztem Wasser, das durch das Rohr 68 zugeführt wird, ausgespült. Um den Eintritt von Laugelösung durch den unteren Doppelfilterboden 60 in die "Feinentsalzungsstufe" zu verhindern, wird unterhalb des unteren Doppelfilterbodens 60 durch das Rohr 74 Sperrwasser eingeführt, das zusammen mit dem Regeneriermittelablauf (verbrauchte Laugelösung) durch das Rohr 72 abgeleitet wird. Der Regeneriermittelablauf (verbrauchte Säurelösung) aus der Kationenaustauscherharzregeneration wird durch den oberen Doppelfilterboden 60 und das Rohr 73 abgeleitet.

Nach der Regeneration der Ionenaustauscherharze und dem Spülvorgang werden die am besten regenerierten Schichten von Kationen- bzw. Anionenaustauscherharz, die sich am oberen Ende des Kationen- bzw. Anionenaustauscherharzbettes in der "Grobentsalzungsstufe" befinden, wieder in die entsprechenden Behandlungsabteile der "Feinentsalzungsstufe" zurücktransportiert. Nach einer Spülung ist die Entsalzungsanlage wieder betriebsbereit.

Es ist für den Fachmann klar, welche Flüssigkeiten nach dem erfindungsgemässen Verfahren behandelt werden können. Der Fachmann kann auch leicht feststellen, welche Kationen- bzw. Anionenaustauscherharze sich für die Behandlung einer bestimmten Flüssigkeit eignen und mit welchen Regeneriermitteln diese Ionenaustauscherharze regeneriert werden können.

## Patentansprüche

1. Verfahren zur diskontinuierlichen Ionenaustauschbehandlung von salzhaltigen Flüssigkeiten mittels mehrerer Ionenaustauscherharzbetten mit verschiedenen Funktionen, wobei alle Ionenaustaucherharzbetten in einem einzigen Behandlungsbehälter angeordnet sind, der im Auf- und/ oder Abstrom durchströmt wird, und die erschöpften Ionenaustauscherharze im Gleich- oder Gegenstrom innerhalb des Behandlungsbehälers regeneriert werden, dadurch gekennnet, dass man eine salzhaltige Flüssigkeit nacheinander durch eine Grobentsalzungsstufe, die ein oder mehrere Kationenaustauscherharzbett(en) und ein oder mehrere Anionenaustauscherharzbett(en) umfasst, und durch eine Feinentsalzungsstufe, die ebenfalls ein oder mehrere Kationenaustauscherharzbett(en) und ein oder mehrere Anionenaustauscherharzbett(en) umfasst, leitet, und dass man die erschöpften Ionenaustauscherharze regeneriert, indem man das bzw. die Kationenaustauscherharzbett(en) aus der Feinentsalzungsstufe abzieht und in Strömungsrichtung des Regeneriermittels vor das bzw. die entsprechende(n) Kationenaustauscherharzbett(en) der Grobentsalzungsstufe transportiert und das bzw. die Anionenaustauscherharzbett(en) aus der Feinentsalzungsstufe abzieht und in Strömungsrichtung des Regeneriermittels vor das bzw. die entsprechende(n) Anionenaustauscherharzbett(en) der Grobentsalzungsstufe transportiert, worauf man das gesamte Kationenaustauscherharz und das gesamte Anionenaustauscherharz gleichzeitig, aber getrennt im Gleich- oder Gegenstrom mit einem Kationenaustauscher- bzw. Anionenaustauscherregeneriermittel behandelt, den jeweiligen Regeneriermittelüberschuss ausspült und die in Strömungsrichtung der Regeriermittel in der Grobentsalzungsstufe zuvorderst liegenden Anteile der Ionenaustauscherharze wieder in die Feinentsalzungsstufe zurücktransportiert, wonach man wieder salzhaltige Flüssigkeit durch die Grobentsalzungsstufe und die Feinentsalzungsstufe führt, bis die Ionenaustauscherharze wieder erschöpft sind und regeneriert werden müssen.

2. Verfahren nach Anspruch 1, dadurch gekennzeichnet, dass die salzhaltige Flüssigkeit bis zu 100 val/m³ Ionen und bis zu 2 g/m³ Feststoffe enthält.

3. Verfahren nach Anspruch 1 oder 2, dadurch gekennzeichnet, dass man die salzhaltige Flüssigkeit im Abstrom durch den Behandlungsbehälter leitet.

4. Verfahren nach Anspruch 1 oder 2, dadurch gekennzeichnet, dass man die salzhaltige Flüssigkeit im Aufstrom mit einer linearen Geschwindigkeit von mindestens 10 m/h durch den Behandlungsbehälter leitet.

5. Verfahren nach Anspruch 1 oder 2, dadurch gekennzeichnet, dass man die salzhaltige Flüssigkeit im Doppelstrom durch den Behandlungsbehälter führt.

6. Verfahren nach einem der Ansprüche 1 bis 5, dadurch gekennzeichnet, dass die Ionenaustauscherharzbetten jeweils aus einem einzigen Ionenaustauscherharz oder aus einem Gemisch von verschiedenen Ionenaustauscherharzen bestehen.

7. Verfahren nach einem der Ansprüche 1 bis 6, dadurch gekennzeichnet, dass man die Ionenaustauscherharze innerhalb des Behandlungsbehälters im Gegenstrom regeneriert.

8. Verfahren nach einem der Ansprüche 1 bis 6, dadurch gekennzeichnet, dass man die Ionenaustauscherharze innerhalb des Behandlungsbehälters im Gleichstrom regeneriert.

9. Anwendung des Verfahrens nach einem der Ansprüche 1 bis 8 zur Vollentsalzung von mit relativ hohem Salz- und Feststoffgehalt belasteten Flüssigkeiten auf Restkonzentrationen von weniger als 0,5 g/m³ Salzgehalt, dadurch gekennzeichnet, dass man die zu behandelnde Flüssigkeit durch mindestens zwei Behandlungsabteile im Behandlungsbehälter leitet, die abwechselnd und in dieser Reihenfolge Betten von Kationen- und Anionenaustauscherharz(en) enthalten.

10. Vorrichtung zur Durchführung des Verfahrens nach einem der Ansprüche 1 bis 8, dadurch gekennzeichnet, dass zwei oder mehr Behandlungsabteile (6, 8, 10, 12), die durch Filterböden (2; 59) bzw. Doppelfilterböden (4; 60) getrennt sind, in einem Behandlungsbehälter (1; 58) vorgesehen sind, wobei Verteil- und Drainagesysteme (18, 17; 22, 21) für die Ionenaustauscherharze im unteren bzw. oberen Teil der Behandlungsabteile (10,6; 12, 8) so angebracht sind, dass die Ionenaustauscherharze gleichmässig aus den einen Behandlungsabteilen (10; 12) abgezogen und in die anderen Behandlungsabteile (6; 8) zugeführt werden können.

11. Vorrichtung nach Anspruch 10, dadurch gekennzeichnet, dass die Doppelfilterböden (4; 60) Filterdüsen, bestehend aus einer oberen Filterdüse (50), die mit einem Gegenstrom-Schliesssystem versehen ist, einem Zentrierring (51), einer oder mehreren Ring-Filterlamellen (52), einer unteren Filterdüse (53) sowie einer Ringdichtung (54) zur gleichzeitigen Durchführung der Regenerierung des Anionen- und Kationenaustauscherharzes aufweisen.

## Claims

1. A process for discontinuous ion exchange treatment of salt-containing liquids by means of more than one ion exchange resin bed having different functions, all of the ion exchange resin beds being provided in a single treating vessel through which the liquids pass upwards and/or downwards, and the exhausted ion exchange resins being subjected to coflow or counterflow regeneration within the treating vessel, characterized in that a salt-containing liquid is successively passed through a coarse desalting (demineralization) stage which includes one or more cation exchange resin bed(s) and one or more anion exchange resin bed(s), and through a fine desalting (polishing) stage which likewise includes one or more cation exchange resin bed(s) and one or more anion exchange resin bed(s), and in that the exhausted ion exchange resins are regenerated by removing the cation exchange resin bed(s) from the fine desalting stage and transporting it or them, respectively, into a position in the flow direction of the regenerant upstream of the corresponding cation exchange resin bed(s) of the coarse desalting stage, and by removing the anion exchange resin bed(s) from the fine desalting stage and transporting it or them, respectively, into a position in the flow direction of the regenerant upstream of the corresponding anion exchange resin bed(s) of the coarse desalting stage, whereupon the combined cation exchange resin and the combined anion exchange resin are simultaneously, but separately treated with a cation exchanger regenerant and an anion exchanger regenerant, respectively, by coflow or by counterflow, the respective excess of regenerant is rinsed out and the portions of the ion exchange resins lying, in the direction of flow of the regenerants, right at the front in the course desalting stage are again transported back into the fine desalting stage, whereupon salt-containing liquid is again passed through the coarse desalting stage and the fine desalting stage until the ion exchange resins are again exhausted and have to be regenerated.

2. A process according to claim 1, characterized in that the salt-containing liquid contains up to 100 val/m$^3$ of ions and up to 2 g/m$^3$ of solids.

3. A process according to claim 1 or 2, characterized in that the salt-containing liquid is passed downwards through the treating vessel.

4. A process according to claim 1 or 2, characterized in that the salt-containing liquid is passed upwards through the treating vessel at a velocity of at least 10 m/h.

5. A process according to claim 1 or 2, characterized in that the salt-containing liquid is passed upwards and downwards through the treating vessel.

6. A process according to any one of claims 1 to 5, characterized in that the ion exchange resin beds each consist of a single ion exchange resin or of a mixture of different ion exchange resins.

7. A process according to any one of claims 1 to 6, characterized in that the ion exchange resins are subjected to counterflow regeneration within the treating vessel.

8. A process according to any one of claims 1 to 6, characterized in that the ion exchange resins are subjected to coflow regeneration within the treating vessel.

9. The application of the process according to any one of claims 1 to 8 for complete softening of liquids loaded with a relatively high salt and solids content to residual concentrations of less than 0.5 g/m$^3$ of salt content, characterized in that the liquid to be treated is passed through at least two treating compartments within the treating vessel, which contain, alternatingly and in this order, beds of cation and anion exchange resin(s).

10. A device for carrying out the process according to any one of claims 1 to 8, characterized in that two or more treating compartments (6, 8, 10, 12) which are separated by filter plates (2; 59) or double filter plates (4; 60), are provided within a treating vessel (1; 58), distributing and drainage systems (18, 17; 22, 21) for the ion exchange resins being installed in the lower part and the upper part, respectively, of the treating compartments (10, 6; 12, 8) so that the ion exchange resins can be uniformly removed from the one treating compartments (10; 12) and supplied to the other treating compartments (6; 8).

11. A device according to claim 10, characterized in that the double filter plates (4; 60) comprise filter nozzles consisting of an upper filter nozzle (50) which is provided with a counterflow closing system, a centring ring (51), one or more ring filter lamellae (52), a lower filter nozzle (53) as well as a ring packing (54), for simultaneously carrying out the regeneration of the anion and cation exchange resin.

**Revendications**

1. Procédé pour le traitement discontinu de liquides contenant des sels, par échange d'ions au moyen de plusieurs lits de résines échangeuses d'ions, exerçant des fonctions différentes, dans lequel tous les lits de résines échangeuses d'ions sont disposés dans un récipient de traitement unique où l'écoulement se fait de bas en haut et/ou de haut en bas et dans lequel les résines échangeuses d'ions épuisées sont régénérées dans le sens du courant ou à contre-courant dans le récipient de traitement, caractérisé en ce que l'on fait passer un liquide contenant des sels successivement à travers un étage de dessalage grossier qui comprend un ou plusieurs lits de résines échangeuses de cations et un ou plusieurs lits de résines échangeuses d'anions et à travers un étage de dessalage fin qui comprend également un ou plusieurs lits de résines échangeuses de cations et un ou plusieurs lits de résines échangeuses d'anions, et en ce que l'on régénère les résines échangeuses d'ions épuisées en retirant le ou les lits de résines échangeuses de cations de l'étage de dessalage fin et qu'on le ou les transporte, dans la direction du courant de l'agent de régénération, devant le ou les lits de résines échangeuses de cations de l'étage de dessalage grossier et que l'on retire le ou les lits de résines échangeuses d'anions de l'étage de dessalage fin et qu'on le ou les transporte, dans la direction du courant de l'agent de régénération, devant le ou les lits de résines échangeuses d'anions correspondants de l'étage de dessalage grossier, après quoi l'on traite toute la résine échangeuse de cations et toute la résine échangeuse d'anions simultanément, mais séparément, dans le sens du courant ou à contre-courant par un agent de régénération d'échangeurs de cations et d'anions, respectivement, on élimine par lavage l'excès de chacun des agents de régénération et l'on ramène dans l'étage de dessalage fin les fractions des résines échangeuses d'ions qui, dans la direction du courant de l'agent de régénération, se trouvent tout à l'avant dans l'étage de dessalage grossier, après quoi on fait passer de nouveau un liquide contenant des sels à travers l'étage de dessalage grossier et l'étage de dessalage fin jusqu'à ce que les résines échangeuses d'ions soient de nouveau épuisées et doivent être régénérées de nouveau.

2. Procédé selon la revendication 1, caractérisé en ce que la liquide contenant des sels contient des ions jusqu'à 100 val/m³ et des matières solides jusqu'à 2 g/m³.

3. Procédé selon la revendication 1 ou 2, caractérisé en ce que l'on fait passer le liquide contenant des sels de haut en bas à travers le récipient de traitement.

4. Procédé selon la revendication 1 ou 2, caractérisé en ce que l'on fait passer le liquide contenant des sels de bas en haut à travers le récipient de traitement à une vitesse linéaire d'au moins 10 m/h.

5. Procédé selon la revendication 1 ou 2, caractérisé en ce que l'on fait passer le liquide contenant des sels à deux courants à travers le récipient de traitement.

6. Procédé selon l'une quelconque des revendications 1 à 5, caractérisé en ce que les lits de résines échangeuses d'ions consistent chacun en une seule résine échangeuse d'ions ou en un mélange de différentes résines échangeuses d'ions.

7. Procédé selon l'une quelconque des revendications 1 à 6, caractérisé en ce que l'on régénère les résines échangeuses d'ions à contre-courant dans le récipient de traitement.

8. Procédé selon l'une quelconque des revendications 1 à 6, caractérisé en ce que l'on régénère les résines échangeuses d'ions en courant continu dans le récipient de traitement.

9. Application du procédé selon l'une quelconque des revendications 1 à 8 au dessalage complet, jusqu'à des concentrations résiduelles de teneur en sels inférieures à 0,5 g/m³, de liquides chargés de sels et de matières solides à des concentrations relativement élevées, caractérisée en ce que l'on fait passer le liquide à traiter, dans le récipient de traitement, à travers au moins deux compartiments de traitement qui contiennent alternativement et dans l'ordre de succession indiqué des lits de résines échangeuses de cations et d'anions.

10. Dispositif pour l'exécution du procédé selon l'une quelconque des revendications 1 à 8, caractérisé en ce que, dans un récipient de traitement (1; 58), sont prévus deux ou plusieurs compartiments de traitement (6, 8, 10, 12) séparés par des plans de filtration (2; 59) ou des plans doubles de filtration (4; 60), des systèmes de distribution et de drainage (18, 17; 22, 21) pour les résines échangeuses d'ions étant ménagés dans la partie inférieure et supérieure, respectivement, des compartiments de traitement (10, 6; 12, 8) de manière telle que les résines échangeuses d'ions puissent être retirées des compartiments de traitement (10; 12) et amenées dans les autres compartiments de traitement (6; 8) de manière uniforme.

11. Dispositif selon la revendication 10, caractérisé en ce que les plans doubles de filtration (4; 60) présentent des buses de filtration qui consistent en une buse de filtration supérieure (50) munie d'un système de fermeture à contre-courant, en un anneau de centrage (51), en une ou plusieurs lamelles filtrantes circulaires (52), en une buse de filtration inférieure (53) ainsi qu'en un anneau d'étanchéité (54) pour effectuer simultanément la régénération de la résine échangeuse d'anions et de cations.

FIG.1

FIG.2

FIG. 3